# DEMANDE DE BREVET EUROPEEN

(11) **EP 0 896 064 A1**
(43) Date de publication de la demande: **10.02.1999**
(21) Numéro de dépôt: 97390005.3
(22) Date de dépôt: 06.08.1997
(51) Int. Cl.: C12P 1/00, A01G 7/02, C12P 1/04, C12P 1/02

(54) **Système de production contrôlée de CO2 par voie biotechnologique sur substrat nutritif gélifié utilisable notamment pour aider à la croissance des végétaux en aquariophilie**

(71) Demandeur: AB7 Industries SA, 31450 Deyme (FR)
(72) Inventeur: Chelle, René, 31190 Grepiac (FR); Lautier, Jean-Pierre, 31670 Labège (FR)

(57) **Abrégé**

Système de production contrôlée de CO₂ par voie biotechnologique sur substrat nutritif gélifié pour aider à la croissance des végétaux en aquariophilie.
Ce dispositif utilise pour générer le gaz des levures de bière poussant sur un milieu nutritif gélosé. Les bactéries ne pouvant coloniser le gel en profondeur, leur croissance est limité en surface, d'où une maîtrise du débit par variation de la surface du récipient. La durée d'utilisation est également contrôlable en adaptant a la fois le volume du gel et sa concentration en substance nutritive.

Le dispositif selon l'invention est particulièrement destiné à favoriser la croissance des plantes d'aquarium.

## Description

L'objet de l'invention est un dispositif utilisant des fermentations bactériennes pour produire du gaz carbonique (CO₂) avec un débit stable et contrôlé et sur une durée elle même maîtrisée.
L'invention est plus particulièrement destinée à favoriser la croissance des plantes décoratives utilisées en aquariophilie, quoique cet usage ne soit pas limitatif.
Dans le milieu naturel, le gaz carbonique est produit par la respiration de tous les êtres vivants du règne animal. Les végétaux l'utilisent pour leur croissance. La concentration en gaz carbonique (CO₂) est le résultat d'un équilibre entre les végétaux et les animaux.
Pendant la phase diurne, les plantes utilisent le gaz carbonique (CO₂) dissous dans l'eau et produisent de l'oxygène. Ce mécanisme leur permet de fabriquer les éléments nécessaires à leur croissance. La dissolution du CO₂ (et des gaz en général) dans l'eau est fonction de nombreux paramètres dont certains sont contrôlables :
- la pression atmosphérique,
- la température,
- le pH,
- le pouvoir tampon,
- le brassage et l'aération du milieu
Idéalement, la concentration en CO₂ optimale pour les plantes devrait être comprise entre 5 et 20 mg/l. En dessous de 5 mg/l, on peut constater les premiers symptômes de carence sur les plantes les plus sensibles. Des concentrations supérieures à 50 mg/l sont très bien supportées par les végétaux mais induisent des problèmes rénaux chez les poissons. De telles concentrations ne peuvent être rencontrées que dans des eaux douces et acides. En aquarium les concentrations en CO₂ sont en général faibles.
Le CO₂ est l'un des facteurs limitants majeurs pour la croissance des plantes. Une supplémentation du milieu en CO₂ s'avère bénéfique pour les plantes aquatiques.
Le taux de CO₂ dissous influe également sur les paramètres physico-chimiques de l'eau (TAC, TH, pH, Oxygène dissous). Il peut être utilisé pour contrôler ces paramètres dans le bac de l'aquarium.

Les produits existants sur le marché peuvent se classer en deux familles : soit il s'agit de composés solides ou liquides qui dégagent du CO₂ dans l'eau par réaction chimique, soit il s'agit de CO₂ sous forme gazeuse commercialisé dans des récipients sous pression.

Dans la première famille on trouve des composés carbonatés qui se présentent en solution dans des fioles ou sous la forme de pastilles effervescentes.
Dans les deux cas, l'emploi de ces produits entraîne une augmentation massive du taux de CO₂ dissous. Puis les équilibres chimiques se déplacent et le taux revient rapidement à sa valeur initiale. En revanche, on observe d'importantes variations des paramètres physico-chimiques de l'eau pouvant être nuisibles à la faune et à la flore du bac.
Dans la seconde famille, on trouve un grand nombre de produits utilisant du gaz comprimé dans des récipients de type aérosol, dans des bonbonnes de type "obus" ou dans des capsules pour siphon d'eau de Selz.

Un récipient de type aérosol contenant 11g de CO₂ sous pression fournira environ 5 litres de gaz à pression atmosphérique. La contenance des capsules pour siphon est à peu près comparable. Ces capsules nécessitent en plus un dispositif de percussion équipé d'une vanne de régulation. Ces produits s'utilisent avec des chambres de diffusion que l'on remplit de gaz de temps en temps et qui sont au contact de l'eau. Ces dispositifs sont déjà assez coûteux.

Les bonbonnes de CO₂ sous haute pression ont une plus grande contenance permettant une utilisation en continu. Mais elles doivent être équipées d'un détendeur et d'un système de régulation, comme par exemple une électrovanne couplée à un pH-mètre permettant d'arrêter la diffusion dès les premières variations du pH.
La diffusion du gaz se fait par barbotage au travers de dispositifs plus ou moins complexes destinés à optimiser le contact eau-gaz : augmentation de la surface de contact (diffuseurs en verre fritté) ou du temps de contact ( chicanes, spirales etc...).
Ces systèmes très sophistiqués sont délicats d'utilisation et extrêmement onéreux. Ils sont, de ce fait, plutôt destinés à des aquariophiles avertis.

Il existe une voie originale pour la production de C0₂ : celle des bio-réactions. Le principe de ces générateurs repose sur la constatation que grand nombre de fermentations bactériennes s'accompagnent de l'émission de gaz carbonique. L'idée est d'utiliser une bio-réactions comme source de production de CO₂.

Ce principe a déjà été utilisé pour la production du CO₂ en aquariophilie. Le système consistait à l'époque à cultiver des levures de bière dans des fûts prévus à cet effet.
Le système présentait un inconvénient majeur : la culture bactérienne n'était pas contrôlée et se faisait dans tout le volume du réacteur, d'où une production massive de CO₂ qui s'accumulait sous forte pression dans le générateur. Cela nécessitait l'utilisation de matériaux adaptés aux hautes pressions et rendait son utilisation délicate. De plus, les dispositifs de sécurité positionnaient le produit sur le marché à un prix prohibitif.

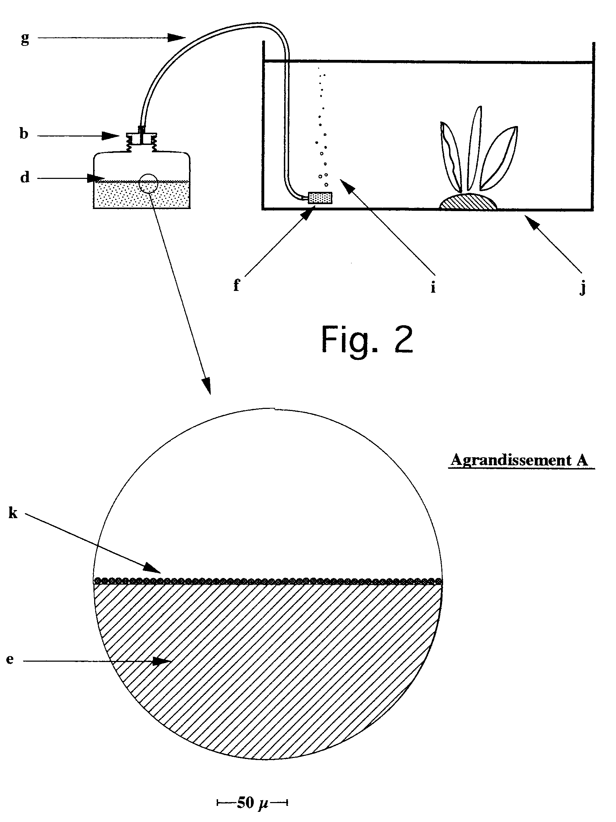

Le dispositif objet de notre invention est un système original par croissance bactérienne sur support nutritif gélifié. Il utilise également les levures de bières pour produire le gaz carbonique. Mais cette fois ci, la production de gaz est contrôlée et volontairement limitée. Ce contrôle est obtenu en utilisant un support nutritif gélifié (e). Les bactéries (k) ont alors tendance à ne coloniser que la surface (d) du gel, et ce sur une faible épaisseur (Agrandissement A, Figure 2, Planche 2/2). La taille de la colonie, et donc la quantité de bactéries actives, est alors limitée par la surface disponible suivant un phénomène d'autorégulation naturelle couramment observé en microbiologie.
Le CO₂ produit, en étroite liaison avec le nombre de bactéries actives, dépend donc de la surface disponible, que l'on peut maîtriser en utilisant des réacteurs de formes adéquates.

Le gel est constitué d'un réseau de macromolécules enfermant de grandes quantités d'eau. Les substances nutritives - principalement du saccharose - sont dissoutes et diffusent librement dans ce réseau. Le gel non colonisé par les bactéries constitue donc une réserve de nutriment permettant l'entretien de la colonie. En faisant varier la quantité de gel et sa concentration en saccharose, on peut ajuster la durée de fonctionnement qui peut aller jusqu'à plusieurs semaines.
Le seul problème qui subsiste est celui de l'acidification du milieu qu'entraîne le développement bactérien. Celui-ci est combattu par l'utilisation d'un tampon carbonate qui limite la diminution du pH. En effet, un pH trop bas a pour conséquence de bloquer le développement des bactéries et par conséquent la production de CO₂
On obtient un système de production de CO₂ bon marché, remarquablement simple dans sa conception, fournissant sous basse pression un débit de CO₂ constant pendant une période de plusieurs semaines. Le débit et la durée d'action sont maîtrisables en phase de conception en jouant sur la forme du réacteur, sur le volume et la composition du gel.

Le présent chapitre décrit l'une des formes que peut prendre l'invention, en l'occurence un générateur destiné à maintenir pendant deux semaines une concentration en CO₂ de 15mg/l pour un bac de 120 litres. Cette présentation n'est absolument pas limitative des formes que peut prendre l'invention, en particulier en ce qui concerne la composition du gel et la constitution du réacteur.
Dans la présentation prise en exemple le substrat nutritif est à base de saccharose à la concentration de 250g par litre. Le pH est stabilisé par un tampon carbonate constitué de 30g d'hydrogénocarbonate de Na. Ce tampon permet de retarder l'acidification du milieu qui est rapidement nuisible à la croissance bactérienne.
Le substrat est gélifié par l'adjonction d'un agar à la concentration de 3g par litre. Cette dose volontairement faible permet d'obtenir un gel souple mais résistant.
D'autres gélifiants ont également été testés avec succès : gélatines animales, alginates etc...Les agars ont été sélectionnés pour leur prix de revient et la qualité du gel obtenu. Ils présentent toutefois l'inconvénient de nécessiter l'ébullition du milieu pour se dissoudre parfaitement.

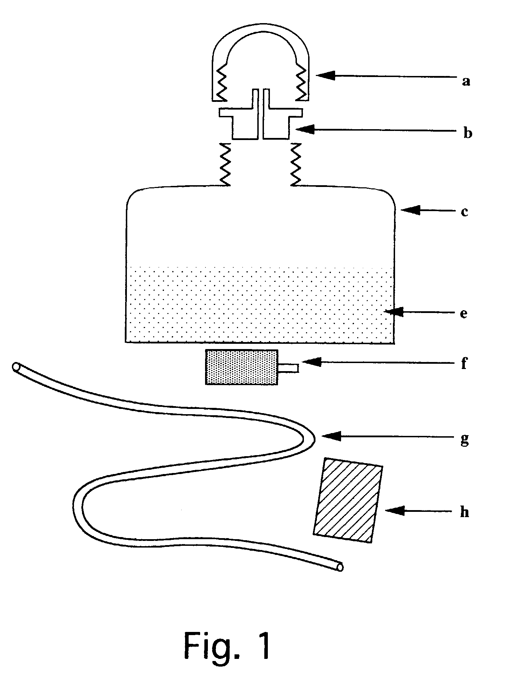

Dans l'une des présentations possibles illustrée par la figure 1, planche 1/2, le gel (e) est coulé à chaud dans un flacon en forme d'encrier (c), large mais de faible hauteur. Le volume du gel est de 200ml. Le flacon est immédiatement fermé a l'aide d'un bouchon vissant (a) pour éviter la contamination bactérienne du gel.
L'ensemencement du gel est réalisé par l'utilisateur final. Le ferment utilisé (k) est de la levure de bière industrielle déshydratée et présentée sous forme de sphérules. Le générateur est fourni avec un sachet (h) contenant environ 1,2g de ces sphérules. (Figures 1 et 2, Planches 1/2 et 2/2)

Sont également fournis un diffuseur classique en verte fritté (f) destiné à être placé dans l'aquarium et dont le rôle est de créer un multitude de bulles de gaz de petite taille, ce qui a pour effet d'augmenter la surface d'échange eau-gaz. On trouve également un tube en plastique souple (g) destiné à relier le diffuseur au générateur ainsi qu'une capsule (b) s'adaptant au col du flacon et présentant un embout en forme de canule qui permet une connexion parfaitement étanche du tube souple. (Figure 2, Planche 2/2)

La figure 1 sur la planche 1/2 détaille le contenu de l'emballage du générateur CO₂.

L'utilisateur ouvre le sachet (h) et verre son contenu dans le récipient. L'humidité du gel est en principe suffisante pour assurer la revivification de la levure mais on conseille l'adjonction d'une cuillerée à café d'eau pour faciliter la réhydratation des sphérules.

Il monte ensuite la capsule (b), le tube plastique souple (g) au bout duquel vient se placer le diffuseur (f), qui est plongé dans le fond de l'aquarium (j).
Dans des conditions normales de température, la production de gaz démarre au bout d'une demi heure, matérialisé par l'apparition des premières bulles (i) au niveau du diffuseur.

Il est possible également de relier le générateur à des diffuseurs à CO₂ du commerce : chicanes, labyrinthe, chambres à membrane semi-perméable etc... Ces dispositifs augmentent le temps de contact entre l'eau et le gaz, permettant une meilleure dissolution. L'expérience montre toutefois que l'utilisation d'un diffuseur classique est parfaitement satisfaisante.

Le dispositif décrit plus haut permet de maintenir dans un bac de 120 l une concentration en CO₂ d'environ 15mg/l pendant 2 semaines.

La figure 2 sur la planche 2/2 décrit le dispositif en fonctionnement. Un agrandissement détaille le comportement des bactéries (k) sur le gel.

## Revendications

1. Générateur de gaz carbonique (CO₂) destiné, entre autres utilisations possibles, à favoriser la croissance des végétaux aquatiques en aquariophilie **caractérisé par** le fait que la génération du CO₂ est obtenue par fermentation bactérienne sur milieu ne pouvant être colonisé qu'en surface limitant ainsi la croissance bactérienne à sa surface d'où un débit du générateur constant au cours du temps et maîtrisable par utilisation d'un réacteur de forme adaptée.

2. Dispositif selon la revendication n°1 **caractérisé par** l'utilisation d'un milieu nutritif gélifié à base d'eau, le gélifiant utilisé étant un alginate type agar agar quoique d'autres gélifiants, comme les gélatines animales, puissent également être utilisés.

3. Dispositif selon les revendications n° 1 et 2 **caractérisé par** le fait que le milieu utilisé est tamponné par incorporation d'une quantité suffisante d'hydrogénocarbonate de sodium dans la formule dans le but de maintenir un pH favorable à la croissance des bactéries.

4. Dispositif selon les revendications n° 1, 2 et 3 **caractérisé par** le fait que l'apport nutritif du milieu gélifié est constitué par un glucide, en l'occurence le saccharose, dont on fait varier la concentration entre100 et 500 g/l afin de maîtriser la durée d'utilisation du dispositif.

5. Dispositif selon les revendications n° 1 à n° 4 **caractérisé par** le fait que, dans l'une des formes possibles que peut prendre l'invention, le réacteur bactérien est composé d'un récipient de matière plastique dont la surface et le volume sont choisis pour obtenir respectivement le débit et la durée de fonctionnement souhaités, le gaz produit étant acheminé au dispositif de diffusion par un tube de plastique souple qui vient s'assujettir au sommet du flacon au moyen d'une capsule equipée d'une canule.

6. Dispositif selon les revendications n° 1 à n° 5 **caractérisé par** le fait qu'entre le moment où il est fabriqué et sa mise en service par l'utilisateur, le gel est protégé des contaminations extérieures au moyen d'un moyen de fermeture étanche comme un bouchon vissant.

7. Dispositif selon les revendications n° 1 à n° 6 **caractérisé par** l'utilisation d'une charge bactérienne initiale composée de levure de bière déshydratée et livrée à part dans un sachet ou tout autre contenant adapté, l'utilisateur final procèdant à l'ensemencement du gel au moment de la mise en service en versant le contenu du sachet sur le gel ainsi qu'un peu d'eau sensée faciliter la réhydratation de la levure.

8. Dispositif selon les revendications n° 1 à n° 7 **caractérisé par** l'utilisation, dans le cas d'un usage en aquariophilie, d'un diffuseur en verte fritté relié au générateur par le tube plastique servant à faciliter la dissolution du gaz carbonique dans l'eau de l'aquarium, l'utilisation d'autres systèmes de diffusion existants sur le marché, tels que chambre de diffusion utilisant ou non une membrane semi-perméable ou dispositifs visant à optimiser le temps de contact eau-gaz (labyrinthe ou spirale) étant également possible.
